# EUROPEAN PATENT APPLICATION

(11) **EP 2 043 332 A2**
(43) Date of publication of application: **01.04.2009**
(21) Application number: 08162054.4
(22) Date of filing: 08.08.2008
(51) Int. Cl.: H04L 29/08, H04N 7/16

(54) **Methods and system for data transfer over hybrid fiber cable infrastructure**

(30) Priority: 08.08.2007 US 954580 P; 07.08.2008 US 187609
(71) Applicant: Harmonic Inc., Sunnyvale, CA 94089 (US)
(72) Inventor: Assouline, Lior, Sunnyvale, CA 94089 (US); Leventer, Amir, Sunnyvale, CA 94089 (US)
(74) Representative: Betten & Resch

(57) **Abstract**

The invention is directed to a method comprising intercepting a download request, originally directed to an original destination, for content; processing the download request; searching for the content in a local cache; servicing the download request from the local cache if the content is found in the local cache; forwarding the download request to the original destination if the content is not found in the local cache; and notifying a server of the intercepted download request, wherein the server transmits the content to one or more clients via one or more video channels. The invention is also directed to a method comprising listening for requests from a client; receiving, from the client, an intercepted download request for content; managing the amount of available bandwidth in one or more video channels; encapsulating the content in a format suitable for video channels; and transmitting the content to one or more clients via one or more video channels.

## Description

### Background of the Invention

### Technical Field

The invention is related to acceleration of Peer-to-Peer (P2P) content transfer and load balancing of P2P content between Data Over Cable Service (DOCSIS) and MPEG2 Transport (TS) video channels over HFC network and in particular to a system and methods to efficiently and transparently, monitor and process regular P2P messages over DOCSIS and transfer any P2P data (such as, but not limited to, Television Encoded Media Content, Television Encoded Media Streaming, Programs, Operating System Distribution Images etc...) to computing devices (such as, but not limited to, Personal Computer (PC), Set Top Boxes (STB), Over the Top boxes (OTT) or Cable Modem (CM)), during periods where available bandwidth (BW) in the MPEG2 Transport video channels at the Hybrid Fiber Cable infrastructure (HFC) exists by processing and encapsulating the content in a video-like transport packets, send it over video channels, extract and process the sent content from the video channels, and using storage if existing in order to cache the content for later demand by the computing device.

### Related Art

In recent years the internet traffic size has grown exponentially. According to researches, this grows is mainly attributed to video files being sent over P2P networks. It is further expected that the distribution of video content (in any way, not necessarily P2P) will further increase the internet traffic.

A P2P computer network is a network that relies primarily on the computing power and bandwidth of the participants in the network rather than concentrating it in a relatively small number of servers.

This model of network arrangement differs from the client-server model (which is a special case of P2P network with one peer being the server and the other being the client) where communication is usually to and from a central server and is therefore more efficient and robust way of content distribution.

Recent market researches show that most of the internet traffic is generated by a P2P network. Furthermore, P2P content is highly repetitive. In fact market researches show that up to 70% of the P2P content is retransmitted at least twice to different peers.

There are many P2P protocol implementations, but P2P traffic in general is characterized by
1. Downloaded files are made from pieces, each with its unique description (hash, string, name, range etc...). Pieces enable a parallelization of the download task with many Peer sources and thus speed up the download rate especially in asymmetrical networks where the upload rate is lower than the download rate.
2. Peers trading/downloading pieces based on their unique descriptions.

P2P traffic is an "all that you can get" traffic as opposed to busts of data retrieval and mostly idles connection (http). This fact puts a heavy load on the business model of Cables operator DOCSIS channels (designed for burst of traffic and not for a steady state traffic flow) as they resell the same bandwidth to multiple users relying on statistical averaging to accommodate all users BW requests in the BW limited provided channels. The exponential growth attributed to P2P traffic is forcing them to upgrade their cable plant with expensive solutions (node splitting, spectrum overlays, more DOCSIS Quadrature Amplitude Modulation (QAM), to name few solutions)

Furthermore, in cables Hybrid Fiber Coax (HFC) plant, the network media (implemented as DOCSIS protocol) is shared between all users on a service group (SG). Therefore, a steady state, always on, "all that you can get" download service, ruins the statistical effect of uncorrelated networking requests and causes a very negative customer satisfaction especially in the "rush hours" of network capacity (typically at evenings). In addition, it is well know that P2P content tends to be highly repetitive i.e. several users are downloading the same content. While the media is shared between all users on a SG, the connection is individual i.e. the same content is sent to multiple users on the SG and there is currently no solution for this inefficiency.

One Solution for the DOCSIS channels overload is to use Deep Packet Inspection (DPI) in order to reduce the priority of P2P services. This has the effect of both decreasing the large pool of customer's running P2P application satisfaction on one hand and on the other, promotes ways to hide the P2P services such that DPI becomes irrelevant.

Additional solution is to upgrade the cable plant capacity by Spectrum overlay, freeing analog channels, Node Splitting etc... Since the P2P applications are "all you can get", this solution (although very expensive to implement) provides no real solution to the P2P traffic as it quickly fills up again the newly available BW.

While the DOCSIS channels are sharing their BW with all users on a SG, there are many video related services (such as Video on Demand (VOD)) for which channel BW is provisioned but is not used all the time. The BW allocated for those services is a function of the peak usage expected and is indeed used only at small portion of the day time.

Furthermore, a recent technological advance permits assigning channels to switched services (Switched Digital Video (SDV)) and therefore broadcasting and using their BW only when requested to do so by users tuning to these specific services. It is expected that more and more services will transition to switched technology since it offers an opportunity to use the statistics in order to free BW for services that are not required and provide a much greater service offering without actually increasing the HFC capacity. Again, the more switched services, the greater the amount of free BW is available at certain hours of the day. In typical current HFC installation this amount of free BW sums up to approximately 10 times the amount of BW offered in DOCSIS channels. This factor is expected to grow as the transition to switched services increases. The only problem with this available BW is that is exists in video channels and there is currently no connection between DOCSIS channels and video channels.

Therefore, what is needed is a system and methods to use the available free BW in non DOCSIS channels (including, but not limited to, VOD channels, MPEG Transport (TS) channels, SDV channels) and use it to transparently redirect P2P traffic on a best effort basis and potentially to local cache to be used by P2P applications. Such a system should not involve changing the users' habits (i.e. they will be able to continue working with their preferred P2P protocol and client if they like), should require a low cost hardware or software addition to the user computing device in order to transparently catch the P2P messages and transfer the redirected P2P content from the video channels into the computing device, should provide substantial increase in download speed for (offline mainly download direction) P2P content while freeing the DOCSIS channel for interactive services such as http, should use the fact that most of the content is repetitive and send it to multiple Peers at once (Multicasting) and even Push it to clients it expects will be requesting the content in the future, and should not involve a massive upgrade in the HFC plant but rather addition of a low cost streaming server with an interface to the HFC resource managers and software modifications to tuning devices at the users premises in order to interface the video channels and capture the P2P content sent.

### Summary

A "LibraPeer" system and methods as described herein provides a transparent P2P traffic offloading from DOCSIS channels into non DOCSIS channels and P2P traffic acceleration by using available free BW in non DOCSIS channels and local cache at the peer computing device. In addition, the content can be altered according to specific parameters of the downloading peer.

The LibraPeer system is made of a LibraPeer Clients and Server. The LibraPeer Client consist of two drivers operating on the Peer computing device - the P2P and LibraPeer Drivers, and a LibraPeer tuning device (attached to the Peer computing device via some sort of network connection or even inside the computing device). It should be noted that the separation between both driver functionality is purely logical and the actual implementation of these driver might result in one or many drivers. The LibraPeer server consists of a computing device operating at the Cable premises typically at the Hub or Head-End.

The LibraPeer server is responsible for collecting LibraPeer client's P2P traffic requests from the peers computing device, prioritizing them, preprocessing them, building the transmission content, interfacing the resource management at the Cable plant in order to get the available free BW on non-DOCSIS channels, notifying the LibraPeer client of the transmission path chosen and finally transmitting the content in on the free BW available in non-DOCSIS channels.

The LibraPeer driver is responsible for tuning the LibraPeer device on the specific transmission path notified by the LibraPeer server and extract the LibraPeer generated traffic out of the transport mux flowing there. The traffic is put on the local content cache for potential access by the P2P driver.

The P2P driver at the Peer computing device is responsible for transparently monitoring and intercepting the P2P traffic and rerouting the relevant requests and traffic to either the remote Peer or to the LibraPeer server and the local cache in accordance.

When the Peer computing device is initialized, the LibraPeer driver and the P2P drivers register with the LibraPeer server over the DOCSIS channel or any other bidirectional capable channel (such as, but not limited to, Out Of Band (OOB) channel in a STB environment) in a potentially secure connection (typically but not limited to secure socket layer - SSL). In this registration, the peer computing device is assigned a LibraPeer Client ID and several Destination IDs. In addition, the peer computing device is assigned a certain number of keys to potentially be used in the decryption of the LibraPeer generated traffic). Then, the LibraPeer driver auto detect the LibraPeer tuner device (which includes, but is not limited to, a (software modified to receive LibraPeer generated traffic) Cable modem, a DVB-C tuner card, a DVB-C tuner external device, a Set Top Box or Over the Top device connected to the local area network (LAN) running a client that receives LibraPeer generated traffic or any other device being able to tune to a certain QAM frequency and enables running a small client that will extract the LibraPeer generated traffic out of the received video transport traffic)

In one embodiment, when a P2P application sends a message to another P2P entity, the message is caught by the P2P driver before it is being transmitted on the network and analyzed for its content. Any request for P2P data is first checked with the local LibraPeer cache. In "hit" case, the request is discarded and the P2P application receives the content from the local LibraPeer cache. In case a miss is detected i.e. the content does not exists in the local LibraPeer cache, the request is forwarded to it original destination. In addition, the LibraPeer Server is notified with the request properties. In another embodiment, the P2P driver is embedded in a P2P application specifically designed to take advantage of the benefits of the invention described herein.

The LibraPeer driver constantly listens for any transmission notification issued by the LibraPeer server. The transmission notification generally consist of (but is not limited to) a QAM frequency and a LibraPeer destination ID. Whenever such transmission is notified, the LibraPeer driver tunes the LibraPeer tuner device to the notified frequency and extracts (out of the transport packets traffic) the LibraPeer generated traffic having the LibraPeer destination ID that matches one of the destination IDs received in the registration stage. The traffic is then decrypted, potentially processed (one such example of processing is insertion of targeted advertising in movies files or replacement of existing adverts by other advert sent specifically to the Peer via other way, watermark insertion, encryption and decryption, etc...). The content is then indexed and placed in the local LibraPeer cache.

The LibraPeer server constantly listens for requests from LibraPeer P2P clients made over DOCSIS channels. It also monitors the amount of free BW existing in the non DOCSIS QAMs and insert the LibraPeer generated traffic by numerous methods that include --- but are not limited to - interfacing the resource manager of the Cable plant and sending the traffic in the form of a new video session, receiving all traffic before it is being modulated (usually in internet protocol (IP) packets form) and replacing the available BW of certain types of packets (NULL TS packets, for example) with LibraPeer generated traffic and outputting it to the modulators, etc...

The LibraPeer server prioritizes the servicing of the requests according to numerous criteria including, but not limited to, the nature of the underlying traffic (such as a greater priority for P2P streaming traffic), various premium accounts, various Cables operator statistics such as the available free BW, etc...

Before transmitting LibraPeer generated traffic to the LibraPeer tuner devices, the LibraPeer server notifies the LibraPeer drivers of the way the traffic should be extracted that includes, but it not limited to, tuning frequency, service ID, destination ID etc... This notification is sent thru a channel including, but not limited to, regular IP over DOCSIS channel, via preconfigured video channels in the form of LibraPeer generated messages, via OOB channels or any other downlink channel.

The LibraPeer server might decide to send the same traffic to multiple LibraPeer tuner devices (including to clients who have not requested the traffic but might be doing so with high probability in the future i.e. pushing P2P traffic as opposed to servicing P2P requests) by using special "multicast" destination ID and thus further enhancing the efficiency of the transmission especially in popular P2P content. This pushing of content might further be done according to a profile built on the server or on the client of the Peer preferences.

In view of the above summary, it is clear that the LibraPeer System described herein provides a unique system and method for providing a transparent P2P traffic offloading from DOCSIS channels into non DOCSIS channels and P2P traffic acceleration by the use of P2P traffic cache and multicast pushing. In addition to the just described benefits, other advantages of the LibraPeer system will become apparent from the detailed description which follows hereinafter when taken in conjunction with the accompanying drawing figures.

### Brief Description of the drawings

The specific features, aspects and advantages of the present invention will become better understood with regard to the following description and accompanying drawings where:

FIG. 1 is a general system diagram depicting a general purpose computing device constituting an exemplary system implementing a "LibraPeer" as described herein.

FIG. 2 illustrates an exemplary peer-to-peer (P2P) network for content downloading, as described herein.

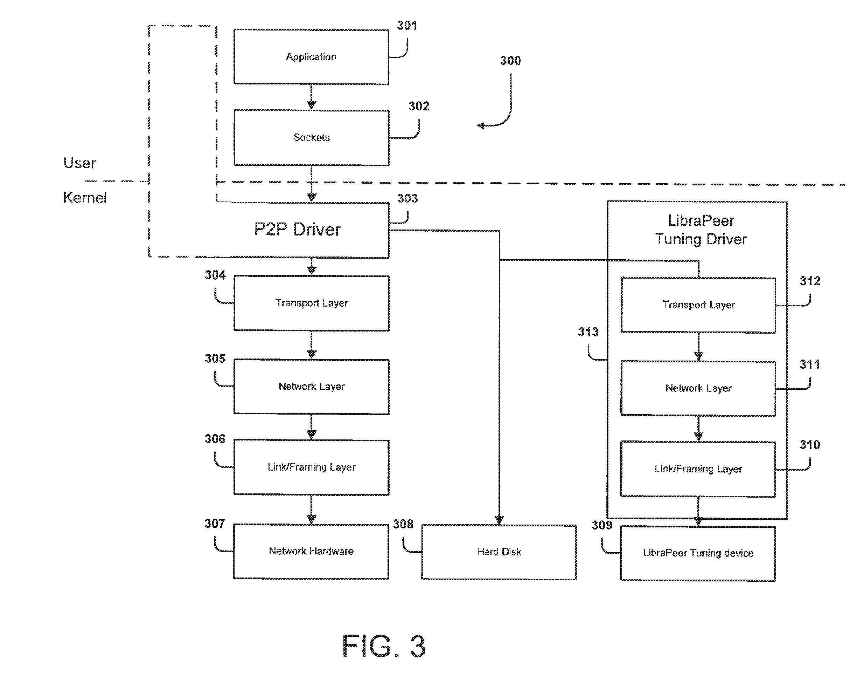

FIG. 3 provides an exemplary architectural diagram which illustrates program modules for implementing the "LibraPeer", as described herein.

FIG. 4 provides an architectural system diagram representing the LibraPeer and P2P drivers environment.

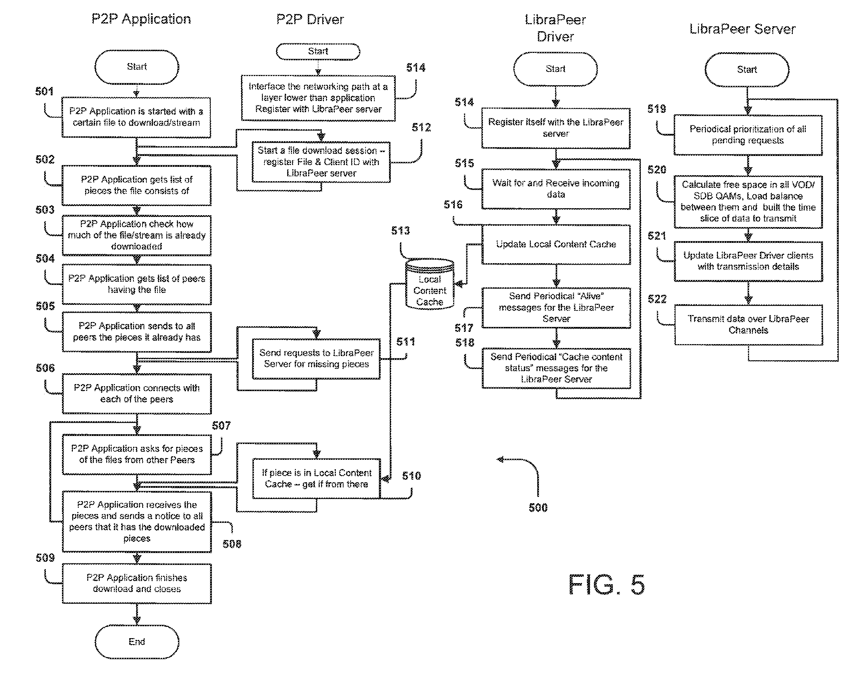

FIG. 5 Provides an operation flow diagram which illustrates the general operation of one embodiment of the LibraPeer as described herein.

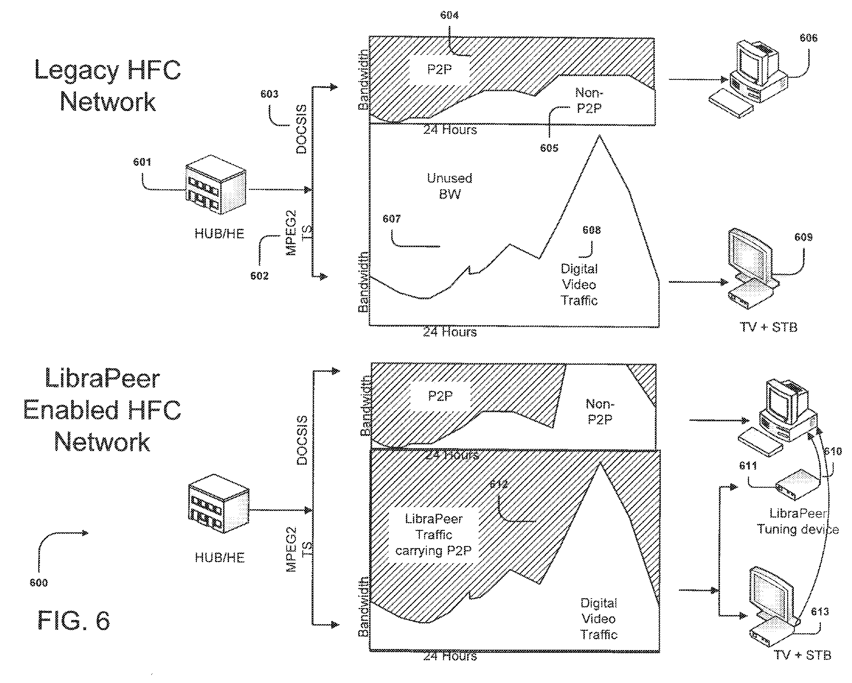

FIG. 6 illustrates the benefits in a specific embodiment in which the invention is may be practiced.

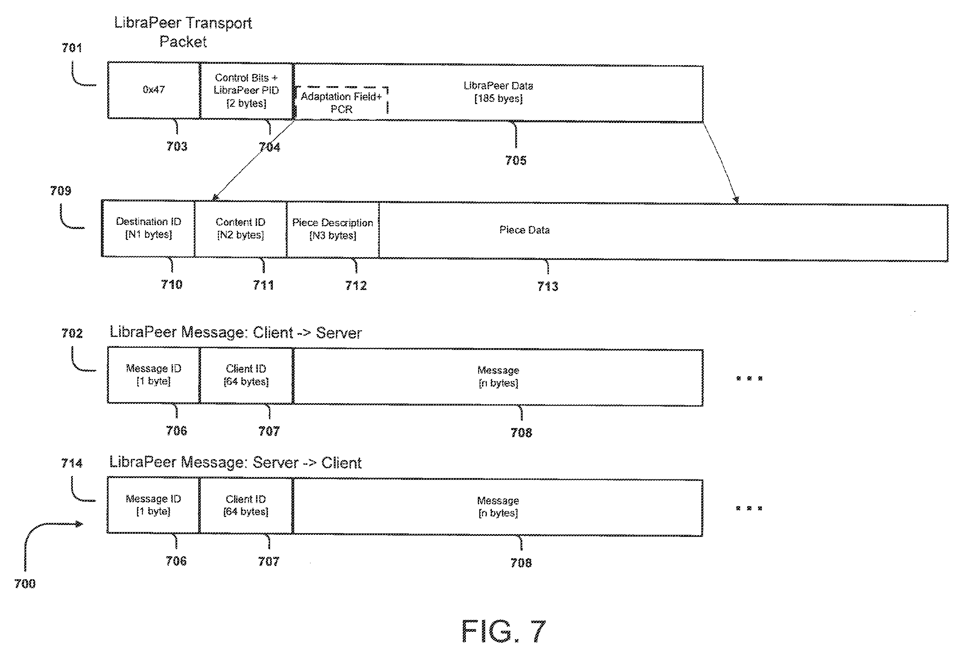

FIG. 7 illustrates few messages format used in the communication between the LibraPeer Server and Client.

**Derailed Description of the Invention**

In the following description of the preferred embodiment of the present invention, reference is made to the accompanying drawings, which form a part hereof, and in which is shown by way of illustration specific embodiments in which the invention is may be practiced. It is understood that other embodiments may be utilized and structural changes may be made without departing from the scope of the present invention.

The invention is directed to a method comprising intercepting a download request, originally directed to an original destination, for content; processing the download request; searching for the content in a local cache; servicing the download request from the local cache if the content is found in the local cache; forwarding the download request to the original destination if the content is not found in the local cache; and notifying a server of the intercepted download request, wherein the server transmits the content to one or more clients via one or more video channels.

The invention is also directed to a method comprising listening for requests from a client; receiving, from the client, an intercepted download request for content; managing the amount of available bandwidth in one or more video channels; encapsulating the content in a format suitable for video channels; and transmitting the content to one or more clients via one or more video channels.

### 1. Exemplary operating environment

The invention consists of at least three parts: a LibraPeer (LP) server typically located in the Cable operator premises, two LibraPeer drivers typically located in a computing device at the end user premises and a tuning device typically located at the end user premises.

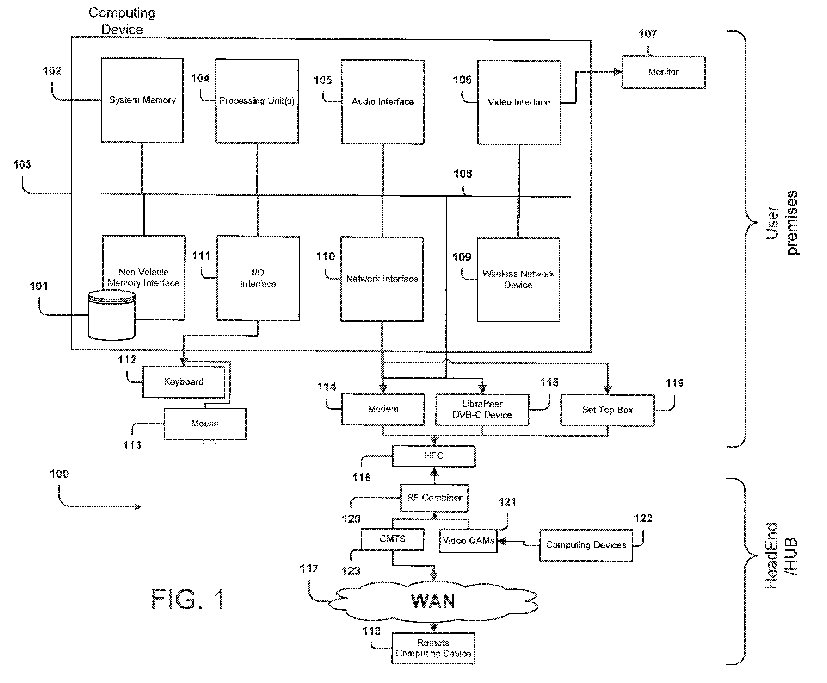

FIG. 1 illustrates an example of a suitable computing system environment 100 on which part of the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held, laptop or mobile computer or communications devices such as cell phones and PDA's, multiprocessor systems, microprocessor-based systems, set top boxes (STB), over the top boxes (OTT), programmable consumer electronics, network PCs, minicomputers, mainframe computers, distributed computing environments that include any of the above systems or devices, and the like.

Part of the invention may be described in the general context of computer-executable instructions, such as program modules, being executed by a computer in combination with hardware modules, including components of a LibraPeer Tuner Device 115. Generally, program modules include routines, programs, objects, components, data structures, etc., that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices. With reference to FIG. 1, an exemplary system for implementing the invention includes a general-purpose computing device in the form of a computer 103.

Components of computer 103 may include, but are not limited to, a processing unit 104, a system memory 102, and a system bus 108 that couples various system components including the system memory to the processing unit 104, a non-volatile memory 101, audio interface 105, a keyboard 112, a mouse 113 or any other pointing device connected thru an input/output interface 111, a monitor 107 or any other viewing device such as, but not limited to, television, projector and the like connected thru a video interface 106.

The computer 110 may operate in a networked environment using logical connections to one or more remote computers, such as a remote computer 118. The remote computer 118 may be a personal computer, a server, a router, a network PC, a peer device, or other common network node, and typically includes many or all of the elements described above relative to the computer 103. The logical connections depicted in FIG. 1 include a wide area network (WAN) 117, but may also include other networks such as local area network (LAN). Such networking environments are commonplace in homes, offices, enterprise-wide computer networks, intranets, and the Internet.

When used in a WAN networking environment, the computer 103 typically includes a modem 114. The modem 114, which may be internal or external, may be connected to the system bus 108 via the network interface 110, or other appropriate mechanism. It will be appreciated that the network connections shown are exemplary and other means of establishing a communication link between the computers may be used.

The LibraPeer server generally consists of computer executable instruction running on a computer similar to what's been described above 122 but any other implementation might be done without departing from the general scope of the server activities.

The exemplary operating environment having now been discussed, the remaining part of this description will be devoted to a discussion of the program modules and processes embodying a LibraPeer system which provides a transparent P2P traffic offloading from DOCSIS channels into video channels and P2P traffic acceleration.

### 2. Introduction

A "LibraPeer" system and methods as described herein provides a P2P traffic processing below or at the P2P application level (and might therefore be transparent to the user and P2P application level) and P2P traffic offloading from DOCSIS networks into MPEG2 TS network and P2P traffic acceleration by using available free BW in switched video channels in order to multicast and push content into local cache existing in the peers computing device.

Note that while the LibraPeer as described herein is applicable for use in P2P networks those skilled in the art will understand that the described system and method offered by LibraPeer is applicable to many other usage such as, but not limited to, content and media distribution that are not part of any P2P network (such as Video on Demand) and are mainly characterized by asymmetric traffic properties i.e. is consisted manly of download into the user premises computing device. One such service potentially offered is placing the content in the LibraPeer server and intercepting requests (no necessarily coming from P2P applications) for that content and servicing them thru the LibraPeer (off DOCSIS) path and cache.

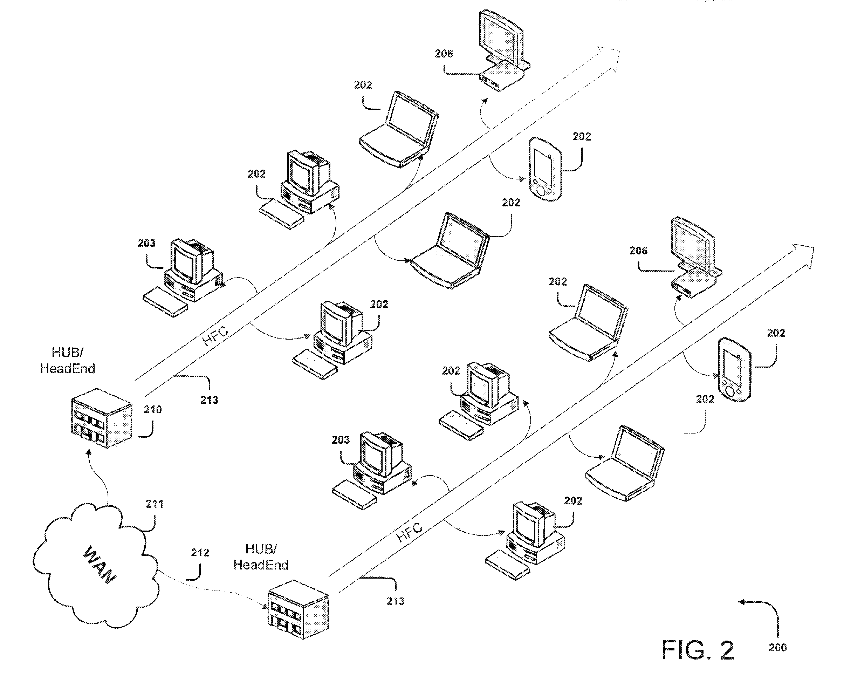

In general, the LibraPeer operates in P2P networks such as the network illustrated by FIG 2. Peers 202 are trading pieces of files according to prior knowledge about the pieces locations. In one P2P networks example (BitTorrent network), such knowledge might be available by a central computing (tracker) device 203 and distributed/pulled/updated by any other peer 202. Peers 202 requesting a certain piece of a file do so directly from other peers. It should be noted that the peep to peer communication is optional and in other P2P protocols peers might download pieces of the content from central servers. All this P2P communication is done over DOCSIS data protocol which is run over dedicated DOCSIS channels shared by all peers on the HFC segment 213 that originates from the HUB/Head-End 210. There is currently no way to use the fact that most of the content flow is repetitive and the same content is sent separately to all requesting peers. In addition, the high BW P2P content fills up the DOCSIS channel and reduces customer's satisfaction as the available BW for interactive activities such as web browsing.

At the same time, most of the switched channels (such as, but not limited to, VOD, Switched Digital Video (SDV) Services, etc...) are partially unused but, as they are not part of the DOCSIS channel, they cannot be used for relieving the BW load caused by P2P applications on DOCSIS channels.

LibraPeer solves all these issues. LibraPeer P2P driver (i.e., generally operating in a lower level 303, at the computing device networking stack, than that of the P2P application generating the P2P messages but might also operates at higher level) transparently monitors and intercepts the P2P messages and decides to forward them to other Peers or serve them out of its local cache 510. In addition, it updates the LibraPeer server of current downloads and their statuses 511 enabling it to prepare for future requests by pre-fetching the relevant content. The local cache is being updated 516 by the LibraPeer server according to certain priorities 519 statuses sent by the LibraPeer (LP) driver 518. The LibraPeer driver is responsible for bridging the gap between the video TS channels over which the LibraPeer generated traffic is transmitted, the DOCSIS channel and the local cache the P2P driver is receiving its content from. In addition, it is responsible for managing the local cache as well as reporting its status to the LibraPeer server.

### 3. System architecture

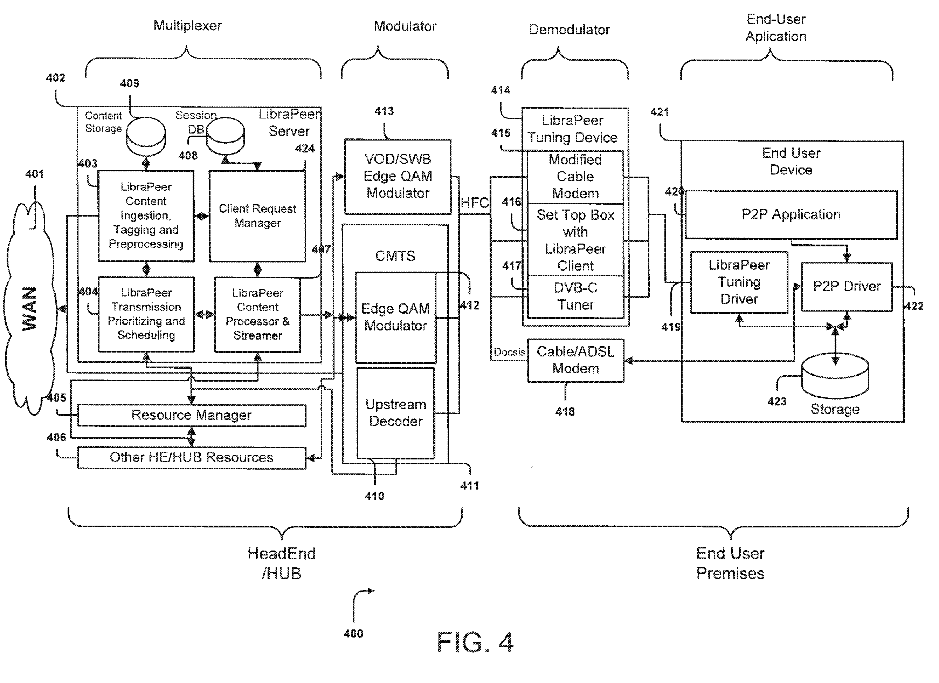

The processes summarized above are illustrated by the general system diagram of FIG. 4. In particular, the system diagram of FIG. 4. illustrates the interrelationship between program (and possible hardware) modules for implementing a LibraPeer, as described herein.

### 3.1 LibraPeer Client

### 3.1.1 2P and LibraPeer Drivers

In general, the P2P 422 and LibraPeer 419 drivers are loaded by default as part of the computing device 421 operating system loading or by request of the user. Upon loading, the P2P driver interfaces 514 the networking path of the computing devices (possibly by inserting a hook or a filter in one of the layers of the networking stack below or at the application 420 level. The Filter includes, but is not limited to, a Transport Driver Interface (TDI) filter in Microsoft windows environment, for example, so that all networking messages are intercepted. In another embodiment, the P2P driver is an application of is own and will provides the content download services in an independent manner. The P2P and LibraPeer drivers register themselves with the LibraPeer server and receive at least a client ID and at least one destination IDs and potentially other parameters (including, but not limited not encryption/decryption keys, watermark etc...). The client ID will serve as identification as the source of the messages and destination ID will serve to determine the destination of content flowing from the server to the clients. Both drivers will then enter an interrupt driven state. The interrupts include, but it not limited to, LibraPeer generated traffic arriving from the video channels thru the LibraPeer hardware 414 device, P2P messages from P2P applications 420 sent to other network entities via DOCSIS 418.

In order to operate transparently, the LibraPeer P2P driver is generally loaded in the kernel mode above the transport layer but below the application layer (but those skilled in the art will understand that the P2P driver can operate at any level below the P2P application and still provide transparent P2P messages processing and thus not diverge from the main idea of this invention). At this layer, all communication from the socket layer 302 is received and monitored. Upon detection of any of P2P traffic characteristics (including, but not limited to, special sequence of characters characterizing certain P2P protocols, http requests that characterize other P2P protocols and any other characteristic content download request) the P2P driver notes the connection properties (such as, but not limited to, destination IP address and port number) and start listening for P2P related messages. When the P2P driver detects P2P file pieces requests, or any content download request, it first checks with the local cache content 423 for a cache hit. In case there is a hit the piece is served from the local cache 423 and the request is discarded. In case of a miss, the message is forwarded to the lower layer and is thus forwarded to its original destination. In another embodiment, the P2P driver is consisted of an independent application running at the application layer that provide the content download and upload services in addition to the P2P driver services as described above.

It should be noted that in some embodiments of the present invention, the data is locally processed before being returned to the application level. One such processing is, for example, potentially personalized, advert insertion or replacing in content type including, but not limited to, video, games etc..., others include but are not limited to decryption and encryption of the content according to a key received at some previous stage, watermarking etc....Note that while the LibraPeer as described herein is applicable for use in HFC networks, those skilled in the art will understand that the above content processing embodiment offered by LibraPeer P2P driver is applicable to other network including but not limited to wireless, ADSL and the like.

The LibraPeer driver is interrupted by the LibraPeer Tuner device Hardware 414 whenever there is LibraPeer generated traffic to be inspected and processed. The exact behavior is determined by the LibraPeer Hardware device. In modified Cables Modems 415, the interface to the LibraPeer driver is a regular Ethernet network interface 110 since the CM modification is only at the DOCSIS level. The LibraPeer generated traffic is sent to the LibraPeer driver as regular UDP/TCP/Raw encapsulated in Ethernet frames. Practically the same interface is used with STB 119,416 running a LibraPeer client that extract the LibraPeer generated traffic out of a video channel and send it over UDP/TCP/Raw to the LibraPeer Tuning driver via a network interface 110 to be processed with the LibraPeer networking layer 310-312. A DVB-C tuner 417 generally directly extracts the channel TS traffic directly to the computing device memory 102. The LibraPeer Tuner device might, in this case, extract the LibraPeer generated traffic out of the received TS traffic and update the local content cache with the LibraPeer generated data.

### 3.1.2 LibraPeer tuning device hardware

Generally, the LibraPeer driver listens for LibraPeer server messages (typically over a regular encrypted TCP connection in the DOCSIS channel 418) and tunes the LibraPeer tuning device hardware 414 to that specific frequency. The LibraPeer tuning device hardware might consist of a DVB-C tuner 417 that captures and reads all data in a specific frequency channel, a software modified Cable Modem 415 (software modification is needed since the LibraPeer generated traffic is sent over non DOCSIS channels and regular CM need to perform various DOCSIS related operations before they can tune to a channel. In order for the CM to tune to a non IOOCSIS channel and extract all information from the channel, a special software that skips the DOCSIS related steps (such as ranging, registration with the CMTS etc..) and is able to tune to a certain frequency and encapsulate the received traffic and send it to the computing device is needed), or a Set Top Box with a small software that accept commands from the LibraPeer driver to tune to a certain channel frequency, extract the transport packets, encapsulate then in some Ethernet framing (such as but not limited to UDP/TCP and raw) and send them to the LibraPeer driver to be processed via various networking Layers 312 311 and 310. It is understood that other embodiments that extract data from the video channels may be utilized and structural changes may be made without departing from the general idea just described.

The data the LibraPeer hardware reads from the frequency it is tuned to is usually a Transport stream in the form of 701, The LibraPeer hardware will then listen for LibraPeer generated traffic 515 and extract the LibraPeer generated traffic (TS packets with LibraPeer PID 704) according to various bits it reads from the Transport packets including, but is not limited to, Payload Unit start indicator (PUSI) (present in the control bits 704) signaling the start of a LibraPeer content piece, the destination ID 709 which might either be unicast (sent to a specific client) or multicast (in case the content is sent to multiple clients), It should be noted that various additional fields might have to be processed or discarded such as, but not limited to, the PCR field in 705 which is needed in order to send the LibraPeer generated traffic thru conventional QAM device 413.

It is understood that other embodiments (such as, but not limited to, other than Transport Stream form of known protocol over the video channels) may be utilized and structural changes may be made without departing from the scope of the present invention.

The LibraPeer data 709 is extracted 713 and inserted in the local storage 516 cache 423 according to the content ID 711 and piece description 712. The piece description might include the range of the piece from the whole downloaded file or timing parameters in case the content is used for P2P streaming for example.

Regular keep-alive 517 and content cache status 518 notifications are sent to the LibraPeer server.

### 3.2 LibraPeer Server

The LibraPeer content storage 409 is constantly updated by the content ingesting, tagging and preprocessing module 403. This module pre-fetches and caches the requested content from the WAN 401 (to which it is connected via typically a very broad connection) and enables local injection of content (possibly preprocessed for later adverts insertion at the client driver, for example) for pushing into the LibraPeer client. In addition, this module will be able to interface any external entity that will assist it with any of its tasks. This modules also enables placement of content typically ahead of the content distribution in order to ease the content distribution.

In one embodiment, the content ingesting, tagging and preprocessing module 403, whenever it detects that the content requested consists of a video content, preprocess the content in a series of steps that include, but is not limited to, transcoding, resolution change, frame rate change, and any other preprocessing that will assist the content streaming to LibraPeer client over BW restricted channel by adjusting the sent content to one or many of the channel instantaneous properties (for example, available BW).

The LibraPeer server 424 is listening for client request messages 702. Every client request is logged in the Session DB 408.

At periodical intervals 519, the prioritizing module 409 goes over all client request and sort them according to specific parameters that include, but is not limited to, piece characteristics such as popularity, urgency (real time streaming or non-interactive download), size, requesting client service grade (premium, regular etc...), various business related agreements (such as files that are paid to be distributed to peers), etc.... The LibraPeer transmission, prioritizing and scheduling module 404 will then take the most urgent requests, in one embodiment, interface the resource manager 405, in another embodiment interface the streamer 407 and calculated the amount of free BW that is available for the next transmission time slice (which can be of any duration). The LibraPeer transmission, prioritizing and scheduling module 404 might decide, based on the available BW, for example, to send the client a preprocessed version of its request. It will then schedule 520 the transmission of each of the LibraPeer Transport packet traffic 701 and its relevant content 709 taken from the LibraPeer storage 409.

The transmission details will be sent to relevant clients in a LibraPeer message 714 over the regular DOCSIS channel thru a typically TCP (or any other protocol, such as but not limited to, UDP, raw Ethernet IP messages etc...) connection with the LibraPeer driver. The LibraPeer server will then stream 407 the LibraPeer generated traffic into the appropriate free BW channel 413.

### 4. Operational Details of the LibraPeer

### 4.1 Registration of Data requests and Replies

All interactive LibraPeer Registration and message passing from server to client and vice versa is done over regular DOCSIS channel or OOB since it requires a two way channel (upload and download) but generally does not consume a lot of BW.

Data transfer replies from the LibraPeer server are done over video channels (when available BW exists) with the addressing tag (multicast/unicast) used to target the destination tuners. This traffic is generally of high BW and of download direction only.

The messages flowing from peer to peer can be changed in order to allow additional benefits including, but not limited to, content encryption or DRM.

In one embodiment, the content is kept encrypted at the LibraPeer server and the decryption is done at the LibraPeer driver using keys transmitted at earlier stage. In such embodiment, the content provider has more control on users that are able to access a clear version of their content. One such control would be to decrypt the content at the LibraPeer driver and potentially insert a watermark. If the content is requested by another peer, and is serviced by the watermarked peer, the content watermark is removed and encrypted back before being sent to the other peer.

In other embodiment, message describing the content requests (such as torrrent file in case of BitTorrent protocol for example) or any other similar metadata can be altered while leaving the LibraPeer P2P driver in order to reflect altered version of the content that will be sent later by the LibraPeer server. Such alteration is required in such embodiment since potentially P2P applications are requesting a match between the requested metadata (including, but not limited to, hash strings) to the actual (altered) content received.

### 4.2 LibraPeer transmission

The available BW in the video channels can be allocated from several sources: one such source is a Resource Manager 405 typically existing in switched digital video installations that provisions all QAMs BW allocated for switched services and can grant available BW upon request. Another method is by buffering the video traffic (including VOD, and even broadcast video channels) and replacing NULL or other TS packets. Another way is to imitate the Edge device and create from several Single Program Transport Stream (SPTS) (including the LibraPeer generated traffic as one or more SPTS servicea) a Multiple Program Transport Stream (MPTS) that can be delivered to the Edge device.

In order to take advantage of video transport channels existing modulators (i.e. not only DOCSIS modulator with all their derived complexity), the LibraPeer generated traffic is "disguised" as video transport traffic. Generally, edge QAMs 413 uses the Program Clock Reference (PCR) in order to calculate the Bit Rate (BR) with which to stream the traffic to the physical HFC lines. In order to emulate video TS traffic, PCR are inserted in the LibraPeer Transport packets at regular interval (typically every tenth of milliseconds) and are restamped according to the BR the LibraPeer generated traffic is sent at.

In cases there is no possibility to send a LibraPeer stream to an edge QAM (including, but not limited to, cases where a VOD server provides an already built video channel mux to be directly modulated and transmitted by the edge QAM or broadcast channels that are flowing out of muxing devices and contain available BW), the LibraPeer generated traffic can be inserted by packet replacement technique. In this method, all traffic originating from the video source 406 is fed into LibraPeer content streamer 407 where it is subjected to a small fix time delay. While in this time delay, LibraPeer generated traffic originating from 404 can be inserted instead or in addition to the original video streams. It should be noted that additional stream characteristic such as but not limited to Program Specific Information (PSI) packets should be updated to reflect the addition of the new service (including, but not limited to, setting the LibraPeer generated traffic as a private data in a new service so that no interference might occur with the video services).

The LibraPeer server monitors, load balances and negotiates available BW with the Resource Manager 405 for the LibraPeer generated traffic between all video channels having available BW in order to fully utilize the free BW in all video channels.

FIG, 6. provides the benefits in a preferred embodiment in which the application may be used. It can be seen how in legacy HFC network, the P2P fills up the DOCSIS channel 604 while the video channels 607 are mostly unused. Using LibraPeer, the P2P traffic messages are transparently caught up in the computing device 606 preprocessed and sent to the LibraPeer server located at the cable operator premises 601. Part af the P2P content that exists (since it was cached in some earlier stage of pushed by a content provider or even requested from another entity having the content in available form, for example) at the Cable operator premises is encapsulated in LibraPeer generated traffic is sent via the video channels 612 white they are unused (and thus enable much more BW available to the peer white freeing DOCSIS channels for other more interactive applications with less download characteristics). A LibraPeer tuning device 611, or a STB with a LibraPeer Tuning Driver 613 picks up the LibraPeer generated traffic, process it (potentially adapting it to the peer including, but not limited to content personalization and targeted advertising) and transparently transfer it to the P2P application running in the computing device 606 to be placed in a local cache or used immediately.

The foregoing description of the LibraPeer has been presented for the purposes of illustration and description. It is not intended to be exhaustive or to limit the invention to the precise form disclosed. Many modifications and variations are possible in light of the above teaching. Further, it should be noted that any or all of the aforementioned alternate embodiments may be used in any combination desired to form additional hybrid embodiments of the LibraPeer.

Embodiments of the present invention may be summarized as follows. The invention is directed to a method comprising intercepting a download request, originally directed to an original destination, for content; processing the download request; searching for the content in a local cache; servicing the download request from the local cache if the content is found in the local cache; forwarding the download request to the original destination if the content is not found in the local cache; and notifying a server of the intercepted download request, wherein the server transmits the content to one or more clients via one or more video channels. The invention is also directed to a method comprising listening for requests from a client; receiving, from the client, an intercepted download request for content; managing the amount of available bandwidth in one or more video channels; encapsulating the content in a format suitable for video channels; and transmitting the content to one or more clients via one or more video channels.

## Claims

1. A method, comprising:
intercepting a download request, originally directed to an original destination, for content;
processing the download request;
searching for the content in a local cache;
servicing the download request from the local cache if the content is found in the local cache;
forwarding the download request to the original destination if the content is not found in the local cache; and
notifying a server of the intercepted download request, wherein the server transmits the content to one or more clients via one or more video channels.

2. The method of claim 1, further comprising at least one of the following steps:
interfacing a network stack path in a computing device below or at application level;
preprocessing one of the content and the download request;
altering one of the content and the download request according to one of the group consisting of content destination, keys and other peer related information; and/or the steps:
receiving the content from the server;
processing the content received from the server; and
placing the content in the local cache.

3. The method of claim 1 or 2, wherein forwarding the download request to the original destination is performed via Data Over Cable Service (DOCSIS) channel.

4. The method of one of claims 1 to 3, wherein the processing involves replacement and advert insertion of one or more video frames and/or encryption or decryption of the content.

5. The method of one of claims 1 to 4, wherein the local cache is on a storage device or on a memory device.

6. The method of one of claims 1 to 5, wherein the method is configured to run concurrently with a tuning operation.

7. The method of claims 6, wherein the tuning operation and the method are performed on a single computing device or on different computing devices.

8. The method of claim 7, wherein the different computing devices communicate over a wired network or over a wireless network.

9. The method of claim 8, wherein the wired network is of a type chosen from the group consisting of Ethernet, Firewire, Ethernet over power lines, serial, and parallel, and wherein the wireless network is of a type chosen from the group consisting of 802.11b/g/n, Wimax, HSPA, UMTS, GSM, Infiniband, and Bluetooth.

10. A method, comprising:
listening for requests from a client;
receiving, from the client, an intercepted download request for content;
managing the amount of available bandwidth in one or more video channels;
encapsulating the content in a format suitable for video channels; and
transmitting the content to one or more clients via one or more video channels.

11. The method of claim 10, wherein managing includes monitoring the amount of available bandwidth in the one or more video channels.

12. The method of claim 10 or 11, wherein the content is preprocessed and adapted to channel bandwidth.

13. The method of one of claims 1 to 12, wherein the content and download request are of P2P application type.

14. The method of one of claims 10 to 13, further comprising at least one of the steps;
profiling past peer requests in order to better estimate future requests;
informing the one or more clients of the transmission details;
reprocessing the content to enable more efficient post-transmission processing;
preprocessing the content, if it is of video format, and generating multiple versions of the content having different resolutions, frame rates, bit rate and other video encoding parameters;
maintaining a plurality of client requests;
load balancing transmission of the content amongst the one or more video channels;
preprocessing the content so that it behaves like regular video content, by inserting Program Clock Reference (PCR) and updating Program Specific Information (PSI), and transmitting it over regular video edge Quadrature Amplitude Modulation (QAM); and/or
transmitting, to one or more clients, content the server expects that the one or more clients will later request.

15. The method of one of claims 10 to 14, wherein a peer will be able to manually configure its profile for future requests.

16. The method of claim 14, wherein the informing is conducted via a channel type chosen from the group consisting of Data Over Cable Service (DOCSIS), Out Of Band (OOB), and video.

17. The method of claim 14, where the preprocessing includes:
adapting the content to enable quick insertion of adverts;
adapting the content to enable quick replacement of an existing advert with another advert; and/or
at least one of the group of partitioning one slice into a plurality of slices, inspecting motion vectors to find pointing targets, and transforming an inter macro block into an intra macro block.

18. The method of claim 14, further comprising:
sending at least one of the multiple versions according to available bandwidth in the transmission channels and/or according to display and processing capabilities of different targets.

19. The method of claim 14, further comprising:
prioritizing the servicing of the plurality of client requests and chosen content version according to one of the group consisting of content type, urgency, various user account level, and available bandwidth.

20. The method of claim 14, wherein the preprocessed content is configured to be viewed by a regular unmodified Set Top Box (STB).

21. The method of one of claims 10 to 20, wherein the transmitting is performed as a Video On Demand (VOD) or Switched Digital Video (SDV) session and/or performed by replacing certain packets, based on type, into an existing multiplex.

22. The method of one of claims 1 to 21, wherein the content is transmitted to a plurality of clients.
